# EUROPÄISCHE PATENTANMELDUNG

(11) **EP 3 677 436 A1**
(43) Veröffentlichungstag der Anmeldung: **08.07.2020**
(21) Anmeldenummer: 19202658.1
(22) Anmeldetag: 11.10.2019
(51) Int. Cl.: B60B 17/00, B60B 33/00, B60B 33/04, B60B 35/00, B61F 5/38, B66C 7/08, E01B 5/02, F16C 23/04, F16C 29/00

(54) **SCHIENEN-FLURFÖRDERER-SYSTEM**

(30) Priorität: 13.12.2018 DE 102018009914
(71) Anmelder: Strothmann Machines & Handling GmbH, 33758 Schloß Holte-Stukenbrock NRW (DE)
(72) Erfinder: Büllesbach, Tim, 33824 Werther (DE)
(74) Vertreter: Ter Meer Steinmeister & Partner

(57) **Zusammenfassung**

Die Erfindung betrifft ein Schienen-Flurförderer-System mit wenigstens einem Flurförderer (3) mit konkav ausgekehlten Rädern (4) im Bereich des Umfangs, sowie Schienen (2) mit einer konvexen Schienenoberfläche, die bei Kontakt zumindest teilweise in den ausgekehlten Bereich (5) der Räder (4) eintauchen, und dabei während der Bewegung des Flurförderers (3) wenigstens zwei Auflagelinien (19) erzeugen, wobei für jedes Rad (4) oder Radpaar eine Radhalterung (6) mit wenigstens einer waagrechten Rotationsache (W) für jedes Rad und einer senkrechten Drehachse (D) zu einem mit dem Flurförderer (3) verbundenen Lager (10) vorgesehen ist, und wobei die Räder (4) über Antriebe oder manuell auf der Schiene (2) verfahrbar sind. Um ein Schienen-Flurförderer-System zu entwickeln, bei dem Probleme hinsichtlich der Spurvarianz, der Verformung des Wagens oder auch der Spur-Untreue ausgeglichen werden, ist vorgesehen, dass das Lager (10) aus zumindest einem ersten Lagerteil (11) und einem zweiten Lagerteil (12) besteht, wobei eines der Lagerteile (11,12) einen konkaven Oberflächenabschnitt (14) aufweist, der zumindest teilweise in Kontakt mit einem konvexen Oberflächenabschnitt (13) des jeweils anderen Lagerteils (11, 12) steht und wobei beide Lagerteile (11, 12) relativ zueinander unter Beibehaltung des Kontakts bewegbar sind.

## Beschreibung

Die Erfindung betrifft ein Schienen-Flurförderer-System mit wenigstens einem Flurförderer mit konkav ausgekehlten Rädern im Bereich des Umfangs, sowie Schienen mit einer Schienenoberfläche, die bei Kontakt zumindest teilweise in den ausgekehlten Bereich der Räder eintauchen, und dabei während der Bewegung des Flurförderers wenigstens zwei Auflagelinien erzeugen, wobei für jedes Rad oder Radpaar eine Radhalterung mit wenigstens einer waagrechten Rotationsache für jedes Rad und einer senkrechten Drehachse zu einem mit dem Flurförderer verbundenen Lager vorgesehen ist, und wobei die Räder über Antriebe oder manuell auf der Schiene verfahrbar sind.

Bei den hier angesprochenen Schienen(paaren) handelt es sich in erster Linie, aber nicht einschränkend, um die von der Anmelderin vertriebenen Schienen gemäß der DE 4318383 C1 oder der WO 2014/032699 A1, also um Schienen mit einer konvexen Oberfläche. Diese Art von Rundschienen hat sich in der Praxis bestens bewährt, weil sie einfach aufgebaut und somit leicht herstellbar sind. Außerdem kann über das Rundprofil ein Schienen-Flurförderer mit konkaven Radauflageflächen zwischen den Radflanken sicher geführt werden. Ein weiterer Vorteil für Fabrikationshallen besteht darin, dass die Schiene nahezu bündig mit dem Fußboden verlegt werden kann, so dass andere Fahrzeuge in ihrer Bewegungsfreiheit nicht eingeschränkt sind. Im Gegensatz zu U-förmigen Schienen, in denen die Räder der Flurförderer laufen, ist die Verschmutzungsgefahr der Schienen deutlich verringert.

In dem neuesten Prospekt "Rundschienen-Systeme"; Seite 3, der Anmelderin vom März 2018 ist eine derartige Schiene-Rad-Darstellung gemäß dem Oberbegriff gezeigt. Auf der zylindrischen Oberfläche der Schiene laufen dann zwei Flanken des Rades, die in Rollrichtung winklig zur vertikalen bzw. horizontalen Ebene ausgerichtet sind. Die Vorzüge dieser Rundschienen liegen in der Spurstabilität, da das Rad durch die zwei stabilisierenden Flanken auf der Schiene spurstabil geführt wird und in dem durch die Geometrie der Kontaktfläche zwischen Schiene und Rad herrschenden minimalen Widerstand bei abrollender Bewegung. D. h., die Rollbewegung eines Rundschienenrads auf der Rundschiene erfolgt selbst bei verhältnismäßig großen Lasten mit geringem Energieeintrag. Beide ringförmigen Auflagelinien im Falle des Kontaktes mit der Schiene verlaufen innerhalb des konkav ausgekehlten Bereichs des Rades. Die Linienberührung ist so gewählt, dass die Flächenpressung und der Rollwiderstand in einem günstigen Verhältnis stehen.

Man findet in dem Prospekt zudem beispielsweise Drehteller, auf denen ein Flurförderer mit allen Rädern steht und in eine weiterführende Richtung gedreht werden kann. Aus dem Prospekt sind aber auch die dort als "Quadroweiche" benannten Weichen bekannt. Es handelt sich um kleinere gelagerte Drehteller mit kreuzförmig eingelassenen Führungen für die Räder der Flurförderer. Der Durchmesser der Drehteller ist so groß, dass jeweils ein Rad oder Radpaar darauf Platz findet. Für die vorgesehene Richtungsänderung des Flurförderers werden demnach nur die Räder um die dafür notwendige eine vertikale Achse gedreht und auf den kreuzenden Schienen weitergeleitet. Damit wird der Flurförderer quer zu seiner ursprünglichen Fahrtrichtung verfahren. Diese Weichen können dabei selbst angetrieben oder passiv sein und sich erst durch die Initiierung der Drehung der Wagenräder drehen. Eine genaue Positionierung der Weichen im Raum und auch zueinander ist dabei für die Radabstände des Flurförderers von essentieller Bedeutung.

Diese genutzten Schienen-Flurförderer-Systeme haben sich als besonders effektiv und betriebssicher im Schienensystem erwiesen.

Allerdings kommt es vor, dass die Schienen eines Schienenpaars nicht zu 100% exakt parallel verlaufen. Wenn Abweichungen in der Spurweite zwischen den Rundschienenrädern und den Rundschienen nicht ausgeglichen werden können, wird eine Flanke des Rundschienenrades auf der Rundschiene auflaufen oder zumindest höher belastet.

Eine Verdrehung des Rundschienenrades gegenüber der Rundschiene um die Hochachse des Rundschienenrades führt ebenfalls zur Verringerung der Vorzüge, da sich dadurch die Auflagelinien zwischen dem Rundschienenrad und der Rundschiene auf der Rundschiene verschieben und es dadurch u.a. zu erhöhter Reibung beim Abrollen kommt.

Oder es kann durch sehr hohe Lasten auf den Flurförderfahrzeugen dazu kommen, dass die senkrechten Drehachsen der Räder nicht mehr zu 100% parallel zueinander stehen. Auch dadurch wird eine der Flanken der Radauskehlung höher belastet.

Hinzukommen kann natürlich auch eine Schwankung oder Ungenauigkeit in der Orientierung der Rundschiene selbst, sprich einer Spurvarianz oder Spur-Untreue vorhanden sein.

Bisherige Lösungen, um Spurvarianz, Verformung des Wagens oder Spur-Untreue auszugleichen sind die
- Gewährleistung eines axialen Spiels in der Lagerung des Rundschienenrades um Spurvarianzen auszugleichen und
- Die Aufhängung der Radaufhängung im Bereich des Lagers mithilfe eines verformbaren Körpers aus einem Elastomer.

Beide Funktionsweisen haben jedoch Nachteile in ihrer Ausgestaltung. So ist axiales Spiel ungünstig für Anwendungen mit hoher Positioniergenauigkeit oder wirkenden Kräften quer zur Fahrtrichtung des Rundschienenwagens. Bei der Verwendung eines Elastomers zur Aufhängung des Rundschienenrades muss zum Ausgleich der Effekte das Elastomer zunächst verformt werden, was zu einer Erhöhung der Querkraft am Rundschienenrad und/oder Rückstellmoment um die Hochachse des Rundschienenrades führt.

Aufgabe der Erfindung ist es deshalb, ein Schienen-Flurförderer-System zu entwickeln, bei dem die beschriebenen Probleme hinsichtlich der Spurvarianz, der Verformung des Wagens oder auch der Spur-Untreue ausgeglichen werden.

Die Aufgabe wird gemäß den Merkmalen des Anspruchs 1 und insbesondere dadurch gelöst, dass das mit dem Flurförderer verbundene Lager aus zumindest einem ersten Lagerteil und einem zweiten Lagerteil besteht, wobei eines der Lagerteile einen konkaven Oberflächenabschnitt aufweist, der zumindest teilweise in Kontakt mit einem konvexen Oberflächenabschnitt des jeweils anderen Lagerteils steht und wobei beide Lagerteile relativ zueinander unter Beibehaltung des Kontakts bewegbar sind.

Die beiden Lagerteile sind demgemäß relativ zueinander zumindest um die senkrechte Achse drehbar, so dass sich die Räder kurvenförmigen oder nicht exakt parallelen Schienenverläufen anpassen können oder auf den beschriebenen Quadroweichen einsetzbar sind.

Mit Vorteil ist vorgesehen, dass der konvexe und der konkave Oberflächenabschnitt des ersten Lagerteils und des zweiten Lagerteils durch Kreisbögen gleichen Radius' gebildet sind.

Wenn die Oberflächenabschnitte die gleichen Radien besitzen, liegen sie großflächig passgenau aufeinander. Dadurch wird die Druckbelastung oder Flächenpressung auch bei schweren Lasten auf dem Flurförderer im Bereich der beiden Lagerteile sehr gering gehalten.

Vorzugsweise ist der konvexe Oberflächenabschnitt des ersten Lagerteils wenigstens eines Lagers auf dem konkaven Oberflächenabschnitt des zweiten Lagerteils quer zur Schienenverlaufsrichtung bogenförmig schwenkbar.

Es ist also auch zumindest bei einem Teil der Lager vorgesehen, dass die Lagerteile seitlich, also quer zur Schienenrichtung relativ zueinander verschwenkbar sind. Damit ist es auf sehr einfache Weise möglich, Spurvarianzen auszugleichen, ohne dass sich die Belastung an einer Flanke des ausgekehlten Bereichs des Rades unzulässig erhöht. Die beiden ringförmigen Auflagelinien am Rad werden dabei zwar ein kleines Stück verschoben, was aber kaum Auswirkungen auf die Belastung an den Rädern und der Schiene hat.

Vorzugsweise ist das Lager ein Kalottenlager.

Wenn sich die beiden Lagerteile zu einem Kalottenlager zusammenfügen, d. h. beide Kugelabschnittsoberflächen - einmal konkav, einmal konvex - aufweisen, werden Schwenkfreiheitsgrade in alle Richtungen ermöglicht.

Mit Vorteil ist vorgesehen, dass der Mittelpunkt des Kreisbogens des konkaven und/oder des konvexen Oberflächenabschnitts im Bereich der Schiene liegt.

Auf diese Weise wird erreicht, dass sich bei der Schwenkbewegung zwischen dem oberen und dem unteren Lagerteil das Rad um die konvexe Oberfläche der Schiene mitschwenkt.

Besonders bevorzugt ist das höher angeordnete Lagerteil mit einem konkaven Oberflächenabschnitt und das tiefer liegende Lagerteil mit einem konvexen Oberflächenabschnitt versehen.

Grundsätzlich wäre auch der umgekehrte Anordnungsfall denkbar. Aber so hat das zur Folge, dass eventuelle Verschmutzungen in dem Kontaktbereich des oberen und des unteren Lagerteils deutlich besser und nahezu automatisch abtransportiert werden können.

Vorteilhafterweise ist das höhergelegene Lagerteil fest mit einer Tragkonstruktion oder einer Ladefläche des Flurförderers verbunden.

Dadurch wird das obere Lagerteil im Schienen-Flurförderer-System quasi fixiert, während das untere Lagerteil die Dreh- und/oder Schwenkbewegung ausführen kann. Entsprechend ist das untere Lagerteil dann an der Radhalterung angebunden.

Alternativ oder optional zusätzlich zur relativen Schwenkbarkeit ist bevorzugt, wenigstens bei einem Lager Mittel zur Verhinderung der Schwenkbarkeit vorzusehen, so dass bei dem Lager lediglich eine relative Drehbewegung der Radhalterung um die Drehachse durchführbar ist.

Es ist so möglich, ein Lager so festzusetzen, dass die Räder einer Schiene nicht schwenkbar sondern nur drehbar sind. Dies schafft bei exakt ausgerichteten Schienen die Möglichkeit, eine Positionsänderung der Ladefläche gegenüber der Schiene des Flurförderers vollständig zu vermeiden.

Dabei ist es vorteilhaft, wenn einige Lager des Flurförderers mit dem Mittel zur Verhinderung der Schwenkbarkeit versehen sind und die anderen nicht.

Ein solches Mittel ist im Wesentlichen dann sinnvoll, wenn der Flurförderer auf zwei Schienen fährt. Das heißt dann mit großem Vorteil, dass sich beispielsweise nur auf einer Seite des Flurförderers die Räder bei Spurvarianz rechtwinklig zur Schiene bewegen. Dadurch wird die Stabilität des Flurförderers während der Bewegung erhöht.

Mit Vorteil ist vorgesehen, dass zumindest einer der Oberflächenabschnitte mit einem Gleitbelag ausgerüstet ist oder aus einem anderen Material als der jeweils andere Oberflächenabschnitt besteht, dergestalt, dass der Gleitreibwert zwischen beiden Oberflächenabschnitten unter 0,1 liegt.

Bei einem geringen Gleitreibwert zwischen der Oberfläche des ersten Lagerteils und des zweiten Lagerteils kann die seitliche Belastung auf die Räder deutlich minimiert werden.

Bevorzugt weist wenigstens ein Lager eine zusätzliche dämpfende Elastomerschicht auf.

Der Wechsel der Räder beispielsweise von den Schienen auf eine Weiche ist in der Regel mit ganz leichten Höhenunterschieden verbunden. Über diesen "Höhensprung" können insbesondere bei schweren Lasten auf dem Flurförderer Schläge in die Räder eingeleitet werden. Die dämpfende Schicht dient zur Abmilderung der Schlagintensität und schont Lager, Räder und Schienen.

Im Folgenden wird die Erfindung anhand der darstellenden Zeichnungen erläutert. Es zeigen
Fig. 1 einen Eckabschnitt eines Flurförderers und ein Stück einer Schiene in grundsätzlichem Aufbau
Fig. 2 einen Eckabschnitt eines Flurförderers und ein Stück einer Schiene mit mittigem senkrechten Schnitt durch das Rad
Fig. 3 das Verhalten des erfindungsgemäßen Lagers bei Schienenspuruntreue
Fig. 4 das Verhalten des erfindungsgemäßen Lagers bei Überlastung der Ladefläche des Flurförderers
Fig. 5 ein Lager mit einem Mittel zur Verhinderung der Schwenkbarkeit
Fig. 6 ein Lager mit einer zusätzlichen Elastomerschicht

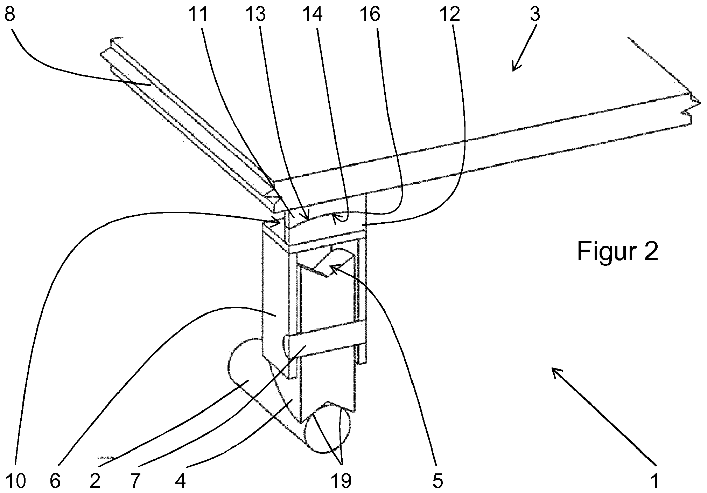

Der senkrechte Schnitt wurde bei den Figuren 2 bis 6 vorgenommen, um die Merkmale besser verdeutlichen zu können. Aus Gründen der Übersichtlichkeit wurde auch (außer bei der Elastomerschicht) auf eine Schraffur verzichtet.

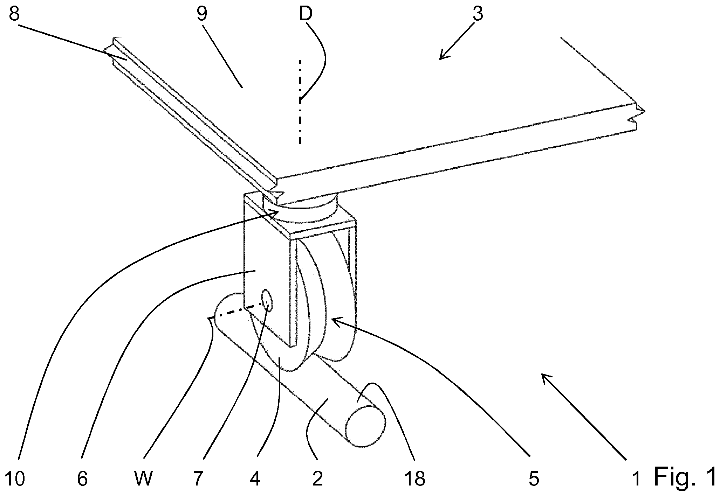

Figur 1 zeigt ein Ausführungsbeispiel den grundsätzlichen Aufbau eines Schienen-Flurförderer-Systems 1. Dabei wird nur eine Ecke des Flurförderers 3 und ein Teilstück einer Rundschiene 2 dargestellt.
Der Flurförderer 3 besitzt eine Trägerkonstruktion 8 auf der sich eine Ladefläche 9 befindet.

Im Ausführungsbeispiel ist genau an der Ecke der Trägerkonstruktion ein Lager 10 vorgesehen, in dem eine Radhalterung 6 mit wenigstens einem Rad um eine vertikale Drehachse D gelagert ist. Das Rad (es können auch mehrere sein) besitzt eine Radachse 7, die auch die waagrechte Rotationsache W bildet, um die das Rad rotieren kann.

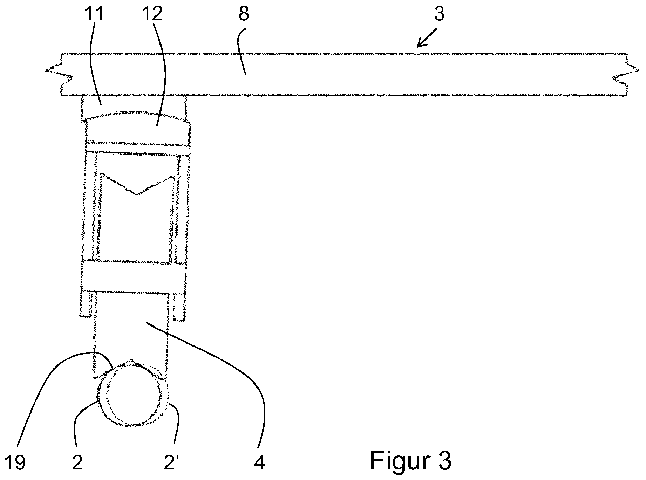

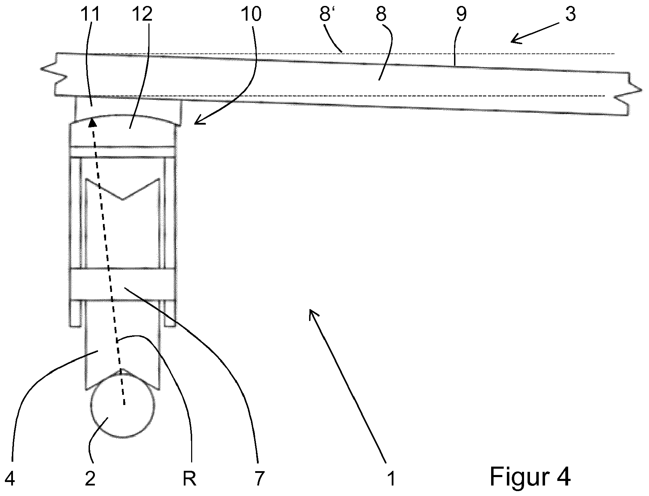

In der Figur 2 ist ein senkrechter Schnitt durch das Lager, das Rad und die Schiene aus Figur 1 vorgenommen worden. Nun erkennt man deutlich, dass das Lager 10 in einen erstes Lagerteil 11 und ein zweites Lagerteil 12 getrennt ist. Das erste Lagerteil 11, das oberhalb des zweiten Lagerteils 12 angeordnet ist, besitzt einen konkaven Oberflächenabschnitt 14, während das Lagerteil 12 einen dem konkaven Oberflächenabschnitt 14 von Lagerteil 11 angepassten konvexen Oberflächenabschnitt 13 besitzt, die aneinander liegen, aber dennoch einen oder mehrere Freiheitsgrade der Bewegungsmöglichkeit relativ zwischen den Lagerteilen 11, 12 erlauben. Zumindest soll die Drehung der Radhalterung um eine die senkrechte Drehachse D erhalten bleiben. Dabei kann auch ein Gleitbelag 16 an einem oder beiden Oberflächenabschnitten 13, 14 vorgesehen sein. In einigen Fällen macht es Sinn, diese Oberflächenabschnitte 13, 14 als Kugeloberflächenabschnitt zu gestalten, so dass man es mit einem Kalottenlager zu tun hat. Die Möglichkeit von Schwenkbewegungen relativ zueinander zwischen den Lagerteilen 11, 12 wird in der Beschreibung zu den Figuren 3 und 4 näher erläutert.

Bezüglich der Figur 2 sei aber noch auf die Wirkung der Auskehlung 5 des Rades, bzw. aller Räder an dem Flurförderer 3 hingewiesen. In die Auskehlung 5 taucht der konvexe Oberflächenabschnitt der Schiene 2 ein, so dass es zu zwei Berührungspunkten kommt, die bei laufendem Rad um die Radachse 7 jeweils eine Auflageumfangslinie 19 auf dem Rad 4 bilden. Die greifen etwas seitlich an der Schiene 2 an, so dass die Räder sicher in ihrer Spur auf der Schiene gehalten werden. Die Berührungsfläche ist also minimal, um die Reibung zu vermindern.

In den Figuren 3 und 4 wird verdeutlicht, wie die beiden Lagerteile 11 und 12 in bestimmten Situationen Schwenkbewegungen relativ zueinander durchführen.

In Fig. 3 ist die Schiene 2 nicht spurtreu zu einer nicht dargestellten zweiten Schiene für den Flurförderer 3. Die korrekte Position wäre beispielhaft die, die als 2' gestrichelt dargestellt ist. In diesem Fall verschwenken die Lagerteile 11 und 12 leicht zueinander, was zur positiven Folge hat, dass das Rad nicht auf einer Seite der Schiene aufläuft und es zu einer einseitigen, die Vorzüge der Lösung beeinträchtigenden Belastung kommt. Es bleibt durch die Schwenkbewegung bei zwei umlaufenden Kontaktumfangslinien im ausgekehlten Bereich des Rades.

Einen ähnlichen Fall, bei dem ein Verschwenken zwischen dem ersten Lagerteil 11 und dem zweiten Lagerteil 12 vorteilhaft ist, zeigt Figur 4, bei der durch eine hohe Last auf der Ladefläche 9 eine Durchbiegung der Tragkonstruktion 8 bewirkt wird. Auch hier ist die Normalstellung der Tragkonstruktion als 8' gestrichelt dargestellt. Das Lager 10 kann also diese Durchbiegung kompensieren und damit eine seitliche Belastung auf die Rundschiene 2 vermeiden. In diesem Fall ist es sogar möglich, die Radachse 7 waagrecht zu halten. In beiden Fällen, also denen in Figur 3 und Figur 4 dargestellten, erkennt man auch, dass es sinnvoll ist, wenn der Mittelpunkt des Radius' R des konkaven Oberflächenabschnitts von dem oberen Lagerteil 11 und der der Mittelpunkt des Radius' R des konvexen Oberflächenabschnitts von Lagerteil 12 im Bereich der Schiene 2 liegt.

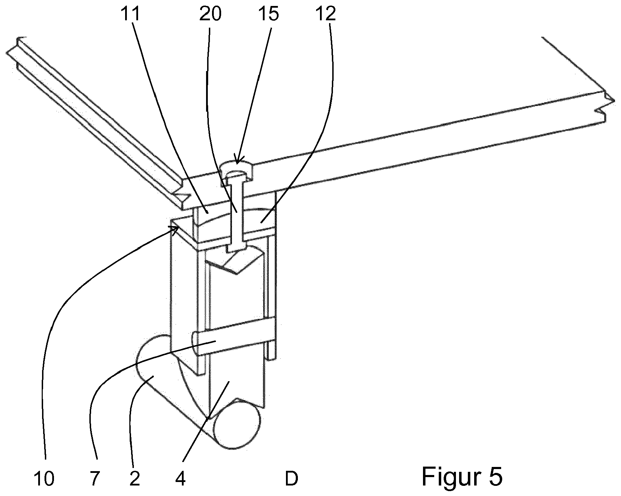

Mit Figur 5 wird eine Besonderheit des Lagers 10 dargestellt. In einer vorteilhaften Ausgestaltung kann das Lager mit einem Mittel zur Verhinderung der Schwenkbarkeit 15, in diesem Ausführungsbeispiels in Form eines durch den ersten und den zweiten Teil des Lagers senkrecht durchgreifenden Bolzen 20, versehen werden. Wenn ein Lager mit einem solchen Mittel zur Verhinderung der Schwenkbarkeit 15 versehen ist, kann dieses Lager nur noch eine Drehbewegung der Radhalterung um eine senkrechte Drehachse D erlauben. Damit kann die Stabilität des Flurförderers deutlich gesteigert werden, indem man nur die Schwenkbarkeit eines Lagers auf einer Schiene zulässt, auf einer zweiten Schiene aber verhindert.

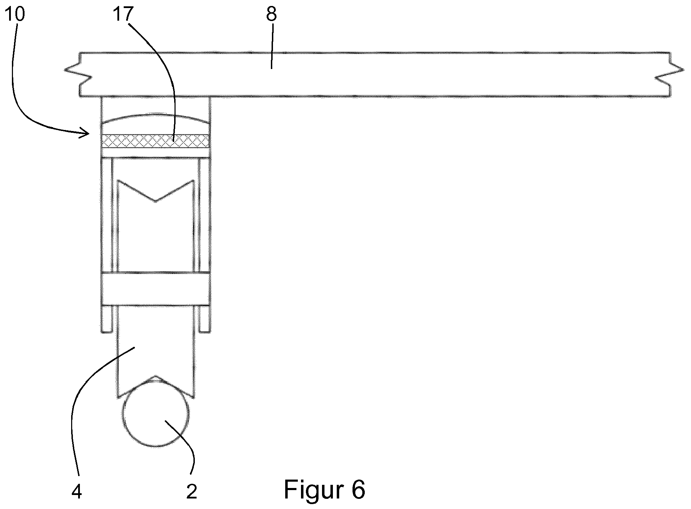

Zuletzt sei noch erwähnt, dass man - wie Figur 6 beispielhaft zeigt - auch elastomere Schichten oder Bauteile 17 im Lager einsetzen kann, um Stöße und Schwingungen zu vermeiden und damit auch die Lebensdauer der Schiene 2 oder des Rades 4 zu erhöhen.

### Bezugszeichenliste

- 1: Schienen-Flurförderer-System
- 2, 2': Schiene, Rundschiene
- 3: Flurförderer, Wagen
- 4: Rad
- 5: Radauskehlung
- 6: Radhalterung
- 7: Radachse
- 8, 8': Tragkonstruktion
- 9: Ladefläche
- 10: Lager, Kalottenlager
- 11: Erstes Lagerteil
- 12: Zweites Lagerteil
- 13: Konvexer Oberflächenabschnitt eines Lagerteils
- 14: Konkaver Oberflächenabschnitt eines Lagerteils
- 15: Mittel zur Verhinderung der Schwenkbarkeit
- 16: Gleitbelag
- 17: Elastomerschicht
- 18: Konvexe Schienenoberfläche
- 19: Kontaktpunkt bzw. -umfangslinie
- 20: Bolzen
- W: Waagrechte Rotationsachse
- D: Senkrechte Drehachse
- R: Radius

## Patentansprüche

1. Schienen-Flurförderer-System mit wenigstens einem Flurförderer (3) mit konkav ausgekehlten Rädern (4) im Bereich des Umfangs, sowie Schienen (2) mit einer Schienenoberfläche, die bei Kontakt zumindest teilweise in den ausgekehlten Bereich (5) der Räder (4) eintauchen, und dabei während der Bewegung des Flurförderers (3) wenigstens zwei Auflagelinien (19) erzeugen, wobei für jedes Rad (4) oder Radpaar eine Radhalterung (6) mit wenigstens einer waagrechten Rotationsache (W) für jedes Rad und einer senkrechten Drehachse (D) zu einem mit dem Flurförderer (3) verbundenen Lager (10) vorgesehen ist, und wobei die Räder (4) über Antriebe oder manuell auf der Schiene (2) verfahrbar sind,
**dadurch gekennzeichnet, dass** das Lager (10) aus zumindest einem ersten Lagerteil (11) und einem zweiten Lagerteil (12) besteht, wobei eines der Lagerteile (11,12) einen konkaven Oberflächenabschnitt (14) aufweist, der zumindest teilweise in Kontakt mit einem konvexen Oberflächenabschnitt (13) des jeweils anderen Lagerteils (11, 12) steht und wobei beide Lagerteile (11, 12) relativ zueinander unter Beibehaltung des Kontakts bewegbar sind.

2. Schienen-Flurförderer-System gemäß Anspruch 1, **dadurch gekennzeichnet, dass** der konvexe und der konkave Oberflächenabschnitt (13, 14) des ersten Lagerteils (11) und des zweiten Lagerteils (12) durch Kreisbögen gleichen Radius' (R) gebildet sind.

3. Schienen-Flurförderer-System gemäß Anspruch 1 oder 2, **dadurch gekennzeichnet, dass** der konvexe Oberflächenabschnitt (13) eines Lagerteils (11, 12) wenigstens eines Lagers (10) auf dem konkaven Oberflächenabschnitt (14) des jeweils anderen Lagerteils (11, 12) quer zur Schienenverlaufsrichtung bogenförmig schwenkbar ist.

4. Schienen-Flurförderer-System nach einem der Ansprüche 1 bis 3, **dadurch gekennzeichnet, dass** das Lager (10) ein Kalottenlager ist.

5. Schienen-Flurförderer-System nach einem der Ansprüche 1 bis 4, **dadurch gekennzeichnet, dass** der Mittelpunkt des Kreisbogens des konkaven und/oder des konvexen Oberflächenabschnitts (13, 14) im Bereich der Schiene (2) liegt.

6. Schienen-Flurförderer-System nach einem der Ansprüche 1 bis 5, **dadurch gekennzeichnet, dass** das höher angeordnete Lagerteil (11) mit einem konkaven Oberflächenabschnitt (14) und das tiefer liegende Lagerteil (12) mit einem konvexen Oberflächenabschnitt (13) versehen ist.

7. Schienen-Flurförderer-System gemäß einem der Ansprüche 1 bis 6, **dadurch gekennzeichnet, dass** das höhergelegene Lagerteil (11) fest mit einer Tragkonstruktion (8) oder einer Ladefläche (9) des Flurförderer (3) verbunden ist.

8. Schienen-Flurförderer-System gemäß einem der Ansprüche 1 bis 7, **dadurch gekennzeichnet, dass** wenigstens bei einem Lager (10) Mittel zur Verhinderung der Schwenkbarkeit (15) vorgesehen sind, so dass bei dem Lager (10) lediglich eine relative Drehbewegung der Radhalterung (6) um die Drehachse (D) durchführbar ist.

9. Schienen-Flurförderer-System gemäß Anspruch 8, **dadurch gekennzeichnet, dass** einige Lager (10) des Flurförderers (3) mit dem Mittel zur Verhinderung der Schwenkbarkeit (15) versehen sind und die anderen nicht.

10. Schienen-Flurförderer-System gemäß einem der Ansprüche 1 bis 9, **dadurch gekennzeichnet, dass** zumindest einer der Oberflächenabschnitte (13, 14) mit einem Gleitbelag (16) ausgerüstet ist oder aus einem anderen Material als der jeweils andere Oberflächenabschnitt (13, 14) besteht, dergestalt, dass der Gleitreibwert zwischen beiden Oberflächenabschnitten (13, 14) unter 0,1 liegt.

11. Schienen-Flurförderer-System gemäß einem der Ansprüche 1 bis 10, **dadurch gekennzeichnet, dass** wenigstens ein Lager (10) eine zusätzliche dämpfende Elastomerschicht (17) aufweist.
